# EUROPEAN PATENT SPECIFICATION

(11) **EP 3 308 924 B1**
(45) Date of publication and mention of the grant of the patent: **12.02.2020**
(21) Application number: 16807477.1
(22) Date of filing: 07.06.2016
(51) Int. Cl.: B29D 30/06, B29C 33/10, B29C 33/02, B29C 33/38, B29C 35/02, B22F 3/105, B22F 5/00, B33Y 80/00, B33Y 10/00

(54) **RUBBER ARTICLE MOLD AND METHOD FOR PRODUCING RUBBER ARTICLE MOLD**
GUMMIARTIKELFORM UND VERFAHREN ZUR HERSTELLUNG EINER GUMMIARTIKELFORM
MOULE POUR ARTICLE EN CAOUTCHOUC ET SON PROCÉDÉ DE PRODUCTION

(30) Priority: 09.06.2015 JP 2015116709
(43) Date of publication of application: 18.04.2018
(73) Proprietor: Bridgestone Corporation, Tokyo 104-8340 (JP)
(72) Inventor: KAWAKI, Ryota, Tokyo 104-8340 (JP)
(74) Representative: Oxley, Robin John George
(86) International application number: PCT/JP2016/066946
(87) International publication number: WO 2016/199770

(56) References cited:
- CN-A- 101 634 368
- FR-A1- 2 996 799
- GB-A- 922 788
- JP-A- H10 296 735
- JP-A- S56 127 439
- JP-A- S56 127 439
- JP-A- S57 137 134
- JP-A- 2006 150 602
- JP-A- 2010 280 171
- JP-A- 2014 015 001
- JP-A- 2014 046 640

## Description

### BACKGROUND OF THE INVENTION

### 1. Field of the Invention

The present invention relates to a rubber article mold and a method for manufacturing a rubber article mold and, more particularly, to a rubber article mold capable of improving the appearance of the rubber article, such as a tire after cure-molding, and a method for manufacturing such a rubber article mold.

### 2. Description of the Related Art

Conventionally, a tire curing mold is provided with a plurality of air vent holes for discharging air from between the tire surface and the molding surface of the mold during curing (vulcanization) . The air vent holes are each formed by drilling or by driving a cylindrical member called a vent piece into the hole prepared in advance when the mold is manufactured.

Also, it is known that string-like spews each 10 mm or longer are often formed on the peripheral surface of the cured tire
because rubber enters the above-mentioned air vent holes during the curing process . The spews are removed after cure-molding for reasons of their detrimental effects on the appearance and performance of the product tire. However, the removal process of spews poses an impediment to improving the production efficiency of the tire. Patent Document 1 discloses a technology for controlling the occurrence of spews by preventing the entry of rubber into the air vent holes. In the technology, a valve member for sealing the opening of the hole on the molding-surface side and a spring for urging the valve member toward the surface of the tire are installed separately in the air vent holes formed on the mold beforehand. And when the tire surface comes in contact with the valve member and pushes it, the valve member closes the air vent holes.

### RELATED ART DOCUMENT

### Patent Document

Patent Document 1: Japanese Unexamined Patent Application Publication No. 2011-116012. Document FR 2 996 799 A1 discloses a tire mold part that is obtained by laser sintering.

Reference is also made to JP 56-127439, which discloses a rubber article mold according to the preamble of Claim 1, and to JP 57-137134 and GB 922788.

### SUMMARY OF THE INVENTION

### Problem to be Solved by the Invention

However, there are a plurality of air vent holes provided in a single mold. Thus, installing the valve member and the spring , which are separate parts, inside the holes requires a number of man-hours. And this results in a drop in production efficiency of mold manufacturing.

Accordingly, an object of the present invention is to provide a rubber article mold capable of discharging air from the molding-surface side to the back-surface side during curing while restraining the entry of rubber into the air vent hole and a method for producing such a rubber article mold.

### Means for Solving the Problem

A rubber article mold of a constitution to solve the above problem is set out in Claim 1, 2, 3 or 4. The mold is a rubber article mold having air discharge portions for discharging air from a molding-surface side for molding a rubber article to a back-surface side. Each air discharge portion has a hole penetrating from a molding-surface to a back-surface of the rubber article mold and a valve member disposed within the hole in such a manner as to provide predetermined clearances between the valve member and a hole wall forming the hole. The hole has an inflow area where the air from the molding-surface side flows in, a discharge area where the air having flowed in from the inflow area is discharged to the back-surface side, and an intermediate area smaller in diameter than the inflow area and the discharge area which communicates with the inflow area and the discharge area. And the valve member has a lead-in part on the molding-surface side, a lead-out part on the back-surface side, and a trunk part smaller in diameter than the lead-in part and the lead-out part and connecting the lead-in part with the lead-out part.

The method for manufacturing the rubber article mold as recited in any of claims 1 to 7 is a method for manufacturing a rubber article mold by an additive fabrication process, including casting a laser beam at metal powder and laminating sintered layers. In this method, interlinking pieces interlinking the hole wall and the valve member by coming in contact with the hole wall forming the hole and the periphery of the valve member are formed simultaneously on a lower layer side in a lamination direction of the sintered layers within the clearance continuing from the molding-surface side to the back-surface side. Accordingly, the valve member can be held motionless during the manufacturing by the additive fabrication process, and thus the valve member can be formed accurately and reliably.

### BRIEF DESCRIPTION OF THE DRAWINGS

FIG. 1 is a sectional view showing a curing apparatus.
FIG. 2 shows a tread mold.
FIG. 3 is a sectional view of an air discharge means set in the design of a tread mold.
FIG. 4 shows the movement of a valve member.
FIG. 5 shows an exemplary embodiment of an additive fabrication apparatus.
FIG. 6 shows the relationship between the lamination direction of manufacturing and the axis of the air discharge means.
FIG. 7 is a sectional view illustrating a state in which props are set in an air discharge means of a tread mold designed by CAD.
FIG. 8 shows the initial state of a valve member before curing.
FIG. 9 shows the movement of an air discharge means during cure-molding of a tire.
FIG. 10 shows another embodiment of an air discharge means.
FIG. 11 shows the states of movement of a valve member (another embodiment).
FIG. 12 shows the initial state of a valve member before curing (another embodiment).
FIG. 13 shows the movement of an air discharge means during cure-molding of a tire (another embodiment).
FIG. 14 shows another embodiment of an air discharge means.

### BEST MODE FOR CARRYING OUT THE INVENTION

Hereinafter, the invention will be described based on preferred embodiments which do not intend to limit the scope of the claims of the present invention.

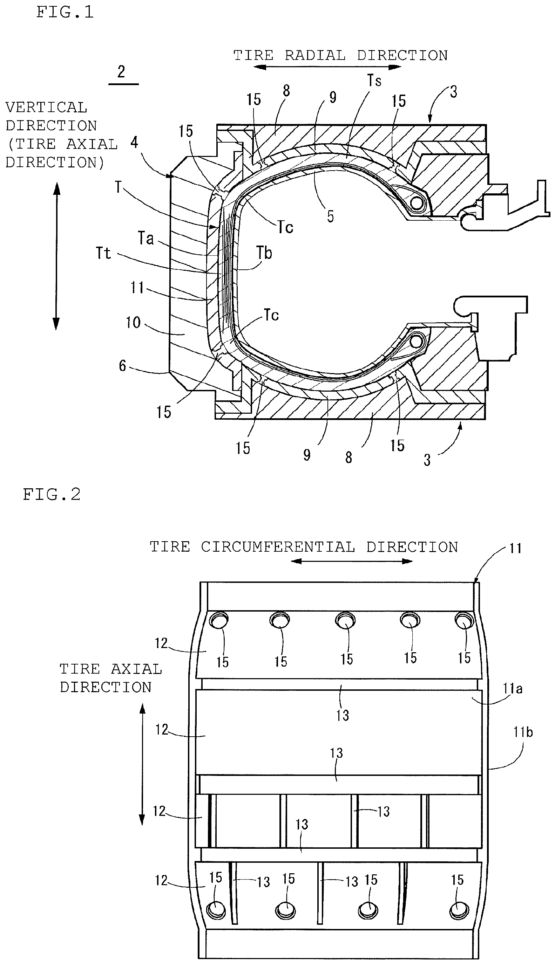

FIG. 1 is a half sectional view schematically showing an essential part of a curing apparatus 2. The mold according to the present embodiment is placed inside the curing apparatus 2 as shown in FIG. 1. The curing apparatus 2 includes a pair of side-molding sections 3, 3 for molding the side regions Ts of the outer surface of a tire T, a tread-molding section 4 for molding the tread region Tt, and a bladder 5 for molding the inner surface of the tire. The side-molding sections 3, 3, which are disposed in upper and lower opposite positions, are each formed approximately into a disk shape along the circumference of the side region Ts of the tire T. The tread-molding section 4, which is disposed between the upper and lower side-molding sections 3, 3, is comprised of a plurality of sector pieces 6 arranged annularly along the circumference of the tire T. The side-molding sections 3, 3 each include a base disk 8 and a side mold 9. The base disk 8 is an attachment for securing the side mold 9. The side mold 9 has a predetermined molding pattern for molding the surface of the side region Ts of an uncured tire T. The sector piece 6 includes a sector segment 10 and a tread mold 11. The sector segment 10 is an attachment for securing a plurality of divided pieces of the tread mold 11. The tread mold 11 has a molding pattern for performing a predetermined molding on the tread region Tt of an uncured tire T. Also, the side mold 9 and the tread mold 11 have air discharge means for discharging air standing between the molding surface and the outer surface Ta of the tire T to the back-surface side at the time of tire molding.

The side mold 9 is so designed as to be vertically movable together with the base disk 8, whereas the tread mold 11 is so designed as to be radially movable together with the sector segment 10. The molding space enclosing the whole area of an uncured tire T is formed by getting the side molds 9, 9 and the plurality of tread molds 11 closer to each other. Following the placement of an uncured tire T within the molding space, the bladder 5 disposed inside the tire T is inflated. With the inflation of the bladder 5, the tire T is pushed from inside toward the side molds 9, 9 and the tread molds 11. At this time, the air standing between the outer surface Ta of the tire T and the surfaces of the side molds 9, 9 and the tread molds 11 is discharged through the air discharge means 15 from the molding-surface side to the back-surface side of the side molds 9, 9 and the tread molds 11. And the molding patterns formed on the side molds 9, 9 and the tread molds 11 is transferred to the outer surface of the tire T. Then simultaneously with the transfer of the molding patterns, the tire T is cure-molded by heating the tire T at predetermined temperatures. It is to be noted that on completion of the cure-molding, mold opening takes place with the side molds 9, 9 and the tread molds 11 moved apart from each other, and the cured tire T is removed.

The side molds 9 and the tread molds 11 according to the present embodiment are manufactured by an additive fabrication process. In the additive fabrication process, the model data of the molds designed by the computer, or CAD, is converted into a plurality of partial shape data (hereinafter referred to as slice data) of layered slices equal in thickness. Based on the slice data, a laser beam is cast to the metal powder deposited into the thickness of the partial shape, and the sintered layer of the metal powder sintered by the laser irradiation is laminated in a sequential order into a three-dimensional mold.

Hereinbelow, a description is given of the side molds 9 and the tread molds 11 for molding the outer surface of the tire T. For the ease of explanation, the following description uses an example of a tread mold 11 only.

FIG. 2 is an illustration showing a tread mold 11. As shown in FIG. 2, the tread mold 11 has contact area molding sections 12 for molding the contact area of the outer surface Ta of the tire T and a plurality of groove parts 13 for molding the tread region Tt on the molding surface 11a thereof and a plurality of air discharge means 15 for discharging, at the time of curing, air trapped between the outer surface Ta of the tire T and the molding surface 11a of the tread mold 11. The contact area molding sections 12 form the base area of the molding surface 11a which forms the whole molding surface of the tread mold 11 with a predetermined curved surface. The groove parts 13 are disposed in such a manner as to extend in the circumferential and axial directions of the tire projecting to predetermined heights from the contact area molding sections 12 of the molding surface 11a. Since the tread molds 11 are disposed in such positions as to mold the tread region Tt of the tire T held horizontally within the curing apparatus 2, a plurality of air discharge means 15 are provided along the tire circumference in positions corresponding to the shoulder region Tc of the tire T where air can be trapped during the curing process (see FIG. 1).

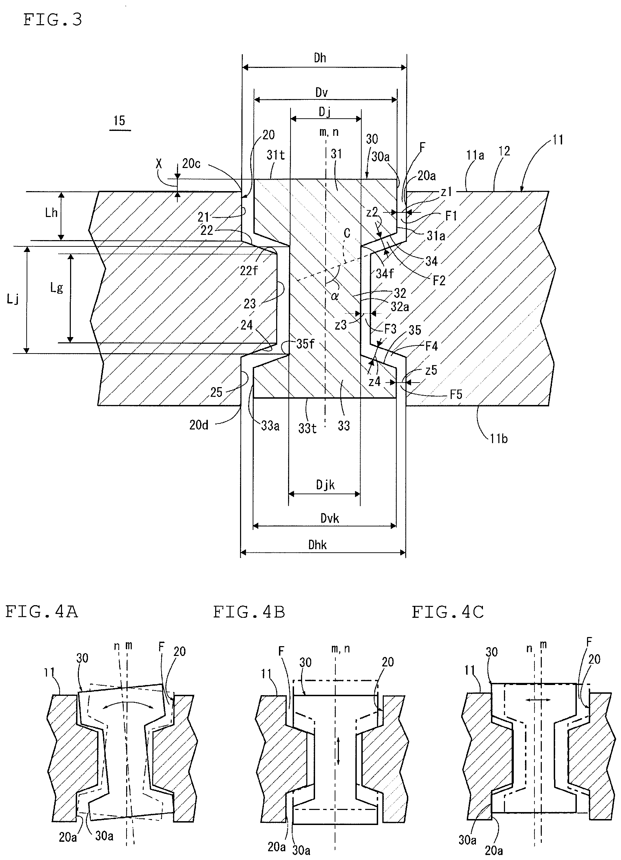

FIG. 3 is a sectional view of an air discharge means set in the design of a tread mold 11. Hereinbelow, a description is given of the air discharge means 15 with reference to Fig. 3. The air discharge means 15 has a hole 20, which penetrates from the contact area molding section 12 of the molding surface 11a of the tread mold 11 to the back surface 11b approximately on the reverse side of the molding surface 11a, and a valve member, which controls the flow of air from the molding surface 11a side to the back surface 11b side.

The hole 20 is formed, for instance, into a circular hole whose axis line extends along the normal direction of the contact area molding section 12. The hole 20 has an inflow area 21 on the molding surface 11a side, a valve seat area 22, an intermediate area 23, a bumping area 24, and a discharge area 25 on the back surface 11b side.

The inflow area 21 is formed into a recess sinking from the contact area molding section 12 of the molding surface 11a toward the back surface 11b side. The inflow area 21 is provided as a cylindrical surface which forms an opening edge 20c with the molding surface 11a. The axis line m of the inflow area 21 is set as the line normal to the contact area molding section 12, for instance. The cylindrical surface of the inflow area 21 is so set as to have the diameter Dh and the depth Lh in the axis line direction of predetermined dimensions . The depth Lh is set to less than 0.5 mm, for instance.

The valve seat area 22, connected to the inflow area 21, is provided as an annular tapered surface whose diameter reduces conically from the inflow area 21 toward the discharge area 25. The axis line of the valve seat area 22 is coaxial with the axis line m of the cylindrical surface of the inflow area 21. A predetermined inclined angle *α* is set for the valve seat area 22. It is to be noted that the inclined angle *α* is whichever larger of the intersecting angles between the virtual extended line C of the generating line of the valve seat area 22 and the axis line m.

The intermediate area 23, connected from the inner peripheral edge 22f of the valve seat area 22, is provided as a cylindrical surface extending toward the back surface 11b side along the axis line m of the cylindrical surface of the inflow area 21. The diameter Dj of the intermediate area 23 is formed smaller than the diameter of the inflow area 21. The bumping area 24, connected from the intermediate area 23, is provided as an annular tapered surface, with the diameter increasing conically from the inflow area 21 toward the discharge area 25, extending toward the back surface 11b side along the axis line m of the cylindrical surface of the inflow area 21. The discharge area 25 is formed into a recess sinking from the back surface 11b side toward the molding surface 11a. The discharge area 25 is provided as a cylindrical surface having an opening edge 20d with the back surface 11b. The axis line of the discharge area 25 is coaxial with the axis line m of the cylindrical surface of the inflow area 21.

In other words, the hole 20 is constructed as a single continuous hole wall 20a having a cylindrical wall of the inflow area 21, the valve seat area 22, a cylindrical wall of the intermediate area 23, the bumping area 24, and a cylindrical wall of the discharge area 25. The hole 20 is hourglass-shaped as viewed in cross section along the axis line m, with the diameter Dh of the cylindrical surface of the inflow area 21 and the diameter Dhk of the cylindrical surface of the discharge area 25 formed larger than the diameter Dj of the intermediate area 23.

The valve member 30, designed to be coaxial with the axis line m of the hole 20, is so formed that the outer shape thereof approximately traces the inner peripheral shape of the hole 20. The valve member 30 has a lead-in part 31, a trunk part 32, and a lead-out part 33. The lead-in part 31 is formed with a size that can be held within the inflow area 21 and having a peripheral surface 31a circular along the cylindrical surface of the inflow area 21. The diameter Dv of the peripheral surface 31a of the lead-in part 31 is so set as to provide an annular clearance F1 of a predetermined clearance dimension z1 between itself and the cylindrical surface of the inflow area 21. The end surface 31t on one end of the lead-in part 31 is so designed as to project from the molding surface 11a surrounding the inflow area 21 of the hole 20 by a predetermined projection height x. The projection height x is so set that the end surface 31t is flush with the contact area molding section 12 of the molding surface 11a when the valve member 30 shuts off the flow of air through the hole 20. The end surface 31t is formed into a plane surface or a curved surface along the contact area molding section 12 of the molding surface 11a in which the hole 20 is formed.

Formed on the other-end side of the lead-in part 31 is a sealing portion 34. The sealing portion 34, continuing from the peripheral surface 31a, is provided as an annular tapered surface whose diameter increases conically from the inflow area 21 toward the discharge area 25. The sealing portion 34 is so set that the axis line thereof is coaxial with the axis line m of the lead-in part 31. And the sealing portion 34 functions as a valve for shutting off the flow of air through the hole 20 between itself and the valve seat area 22 of the hole 20. The sealing portion 34 is set to the same inclined angle *α* as the valve seat area 22 of the inflow area 21 and is so designed as to provide an annular clearance F2 of a predetermined clearance dimension z2 between itself and the valve seat area 22.

The trunk part 32 extends from the inner peripheral edge 34f of the sealing portion 34 as a shank body having a circular cross section coaxial with the axis line n of the lead-in part 31. The diameter Djk of the trunk part 32 is so set as to provide an annular clearance F3 of a predetermined clearance dimension z3 between the peripheral surface 32a of the trunk part 32 and the cylindrical surface of the intermediate area 23. Also, the length Lj of the trunk part 32 is set longer than the length Lg of the cylindrical surface of the intermediate area 23 of the hole 20.

The lead-out part 33 is formed into a circular disk having the peripheral surface 33a thereof smaller in diameter than the cylindrical surface of the discharge area 25. The end surface 33t on the back surface 11b side of the lead-out part 33 is formed into a plane surface, for instance. Also, formed on the end surface on the other-end side is an engaging portion 35. The engaging portion 35, continuing from the peripheral surface 32a of the trunk part 32, is provided as an annular tapered surface whose diameter increases conically from the inflow area 21 toward the discharge area 25. The axis line of the engaging portion 35 is coaxial with the axis line m of the lead-in part 31. The engaging portion 35 prevents the valve member 30 from dropping out of the hole 20 by butting against the bumping area 24 provided in the hole 20. The inner peripheral edge 35f of the engaging portion 35 connects to the peripheral surface 32a of the trunk part 32. The engaging portion 35 is formed with the same inclined angle *α* as the bumping area 24 and is so set as to provide an annular clearance F4 of a predetermined clearance dimension z4 between itself and the bumping area 24. The diameter Dvk of the lead-out part 33 is so set as to provide an annular clearance F5 of a predetermined clearance dimension z5 between the peripheral surface 33a of the lead-out part 33 and the cylindrical surface of the discharge area 25 of the hole 20.

In other words, the valve member 30 is constructed as a single continuous peripheral surface 30a having the peripheral surface 31a of the lead-in part 31, the sealing portion 34, the peripheral surface 32a of the trunk part 32, the engaging portion 35, and the peripheral surface 33a of the lead-out part 33. The valve member 30 is hourglass-shaped as viewed in cross section along the axis line n, with the diameter Dv of the peripheral surface 31a of the lead-in part 31 and the diameter Dvk of the peripheral surface 33a of the lead-out part 33 formed larger than the diameter Djk of the trunk part 32. Accordingly, the design is such that a single continuous annular clearance F consisting of annular clearances F1 to F5 of predetermined dimensions is formed between the peripheral surface 30a of the valve member 30 and the hole wall 20a of the hole 20 provided in the tread mold 11. This clearance F communicates with the molding space on the molding surface 11a side and the space on the back surface 11b, and serves as an air passage that allows the flow of air. The clearance dimensions z1 to z5 of clearances F1 to F5 are set to larger than 0 mm and smaller than 0.5 mm, for instance. This will make the spews forming on account of the clearance F disappear altogether or intermittently. More preferably, if they are set smaller than 0.06 mm, then there will be little entry of rubber into the clearance F and only air will be discharged from there. If the clearance dimension of the clearances F of the annular hollow area is set to smaller than 0.5 mm, the spews forming will be very thin and low in height. Then, without the removal of the spews after cure-molding, the condition similar to the spew mark worn off by about 100 km of vehicular running will be created only if the vehicle fitted with the tires is operated normally on dry road surfaces. Hence, there will be no drop in the appearance quality as well as the motion performance and anti-wear performance of the tire, resulting in generally excellent performance of the tire. It is to be noted that the initial travel of about 300 km with winter tires having low (soft) modulus of elasticity of the tread rubber is required before the spew marks after cutter removal of the spews formed by the air vent holes (circular cross section 1 to 2 mm in diameter), which are conventional air discharge means, are worn off completely. And it is the initial travel of about 500 to 1000 km with high-performance passenger tires having high (hard) modulus of elasticity of the tread rubber. Moreover, the spews formed by making the clearance dimension of the clearance F of the annular hollow area smaller than 0.06 mm will be further reduced in height and disappear from the intermittent presence along the annular extension direction of the hollow area in the tire surface. That is, by making the width of the air vent hole larger than 0 mm, in other words, by making the width of the air vent hole smaller than 0.06 mm without eliminating the air vent hole, there will be little entry of rubber into the air vent hole and only air will be discharged from there.

It is to be noted that if the width of the air vent hole is 0 mm (presence of no air vent hole), the tire cannot be manufactured because the air or gas discharge performance becomes nil and consequently there result flaws, dents and air blisters on the tire surface. Note also that the clearance dimensions z1 to z5 of clearances F1 to F5 in the following description are set to the same dimension, but they may be varied as appropriate as long as they are within the range described above.

FIG. 4 shows the movement of the valve member 30. As described already, a clearance F of a predetermined dimension is provided between the peripheral surface 30a of the valve member 30 and the hole wall 20a of the hole 20 of the air discharge means 15. As a result, as shown in FIG. 4A, the valve member 30 swings inside the hole 20 such that the axis line n tilts in relation to the axis line m of the hole 20. Also, as shown in FIG. 4B, the valve member 30 moves along the direction of the axis line m of the hole 20. And, as shown in FIG. 4C, the valve member 30 moves in parallel with the axis line m of the hole 20. Also, the air discharge means 15 is so designed at the time of mold design that a nearly even clearance dimension is set for the clearance F between the hole wall 20a of the hole 20 and the peripheral surface 30a of the valve member 30. Hence, a passage of air to pass from the molding surface 11a side to the back surface 11b side is secured. The hole 20 and the valve member 30 constituting the air discharge means 15 are molded simultaneously with the manufacturing of the mold by an additive fabrication process.

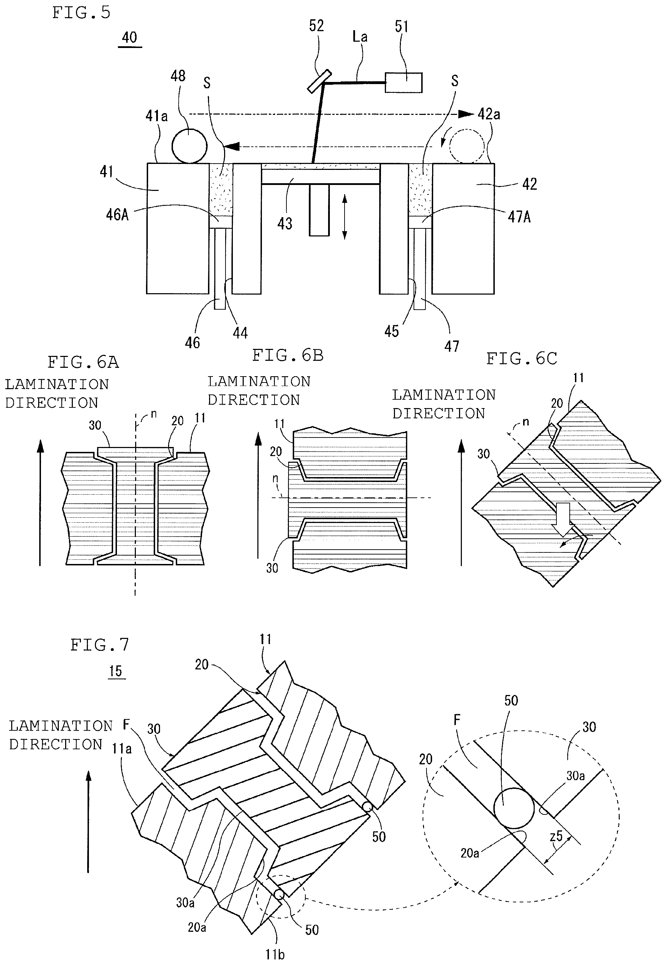

FIG. 5 shows an example of an additive fabrication apparatus 40. The additive fabrication apparatus 40 includes a pair of left and right stages 41, 42 disposed a predetermined distance apart from each other and a worktable 43 equipped vertically movably between the left and right stages 41, 42. The left and right stages 41, 42 are set to the same height so that the upper surfaces thereof are located in the same plane. The stages 41, 42 hold cylinder portions 44, 45 extending in the vertical direction, respectively. The cylinder portions 44, 45 open on the upper surface 41a, 42a sides of the stages 41, 42, respectively. Disposed inside the cylinder portions 44, 45 are feeders 46, 47 having pistons 46A, 47A slidable along the inner peripheral surfacesof the cylinder portions 44, 45, respectively. The feeders 46, 47 rise and fall along the axis lines of the cylinder portions 44, 45, respectively, by the operation of a not-shown drive mechanism driving according to the signals outputted from a not-shown additive fabrication apparatus control means. Filled up to the upper surfaces of the stages 41, 42 on the pistons 46A, 47A is metal powder S to serve as the material for the manufacture of the mold.

Located on the upper surfaces 41a, 42a of the stages 41, 42 is a roller 48 that moves along the upper surfaces 41a, 42a. Driven by a not-shown drive unit, the roller 48 moves between the left and right stages 41, 42, with the peripheral surface thereof rolling in contact with the upper surfaces 41a, 42a of the left and right stages 41, 42. Located above the worktable 43 are a laser gun 51 for emitting a laser beam and an irradiation mirror 52 for directing the laser beam emitted by the laser gun 51 toward the metal powder S. The irradiation mirror 52 forms a sintered layer by sintering the metal powder S deposited on the upper surface of the worktable 43 based on the control signals outputted from the not-shown additive fabrication apparatus control means. The irradiation mirror 52 sinters the metal powder S deposited on the upper surface of the worktable 43 in a sequential order by moving along the coordinate axis set on the worktable 43 as the scanning direction, driven by a not-shown drive means based on the slice data outputted from the not-shown additive fabrication apparatus control means. Upon completion of formation of a sintered layer corresponding to one slice data, the sintering based on the slice data set above the one slice data is started. After this, sintered layers are laminated in correspondence with the respective slice data, and eventually a tread mold 11 in the form as shown in FIG. 2 is manufactured.

Hereinbelow, a description is given of a method for manufacturing an air discharge means 15 by an additive fabrication apparatus 40. As described above, the air discharge means 15 according to the present embodiment is such that there is no connection between the tread mold 11 and the valve member 30 because of the clearance F formed therebetween. Accordingly, a little ingenuity is required if the valve member 30 to be installed within the hole 20 is to be molded with accuracy by an additive fabrication process. With the additive fabrication apparatus 40 as shown in FIG. 5, the mold fabrication progresses upward. That is, with the progress in the manufacture of the mold, a new sintered layer is stacked by depositing new metal powder S on the sintered layer already formed as a part of the valve member 30. Thus, in the manufacture of objects that do not have connection with each other like the hole 20 and the valve member 30, dislocation of the position of the valve member 30 in the manufacturing process may occur gradually in relation to the hole 20 in the manufacturing process as pressures are applied to the sintered layer which is part of the valve member 30 by the operation of the roller 48 when new metal powder S is deposited on the sintered layer.

For example, as shown in FIGS. 6A and 6B, when the axis line n of the valve member 30 is in parallel with the lamination direction and when the axis line n of the valve member 30 is orthogonal to the lamination direction, there occurs almost no problem because the pressures on the hole 20 and valve member 30 halfway through the manufacture is well balanced. However, as shown in FIG. 6C, when the axis line n of the valve member 30 is on a slant relative to the lamination direction, then the position of the valve member 30 halfway through the manufacture may get dislocated gradually in relation to the hole 20 halfway through the manufacture such that the axis line n, for instance, rotates with respect to the axis line m of the hole 20. Thus the valve member 30 cannot be manufactured into the shape as designed. To solve this problem in the manufacture of the mold, therefore, it is necessary that the position of the valve member 30 be fixed relative to the hole 20 by providing props 50 interlinking the hole 20 and the valve member 30 in the clearance F therebetween on the stacking start side.

FIG. 7 is a sectional view illustrating a state in which props 50 are set in an air discharge means 15 of a tread mold 11 designed by CAD. The props 50 are disposed as interlinking pieces interlinking the hole wall 20a of the hole 20 and the peripheral surface 30a of the valve member 30 at the design of the mold by CAD. The props 50 are each spherical, for instance. The props 50 are set in positions where their molding integrally with the tread mold 11 is started at least before the molding of part of the valve member 30 is started. It is to be noted that the starting of molding integrally means the sintering of the tread mold 11 and the props 50 within the same layers sequentially in the molding by the additive fabrication apparatus 40. More preferably, the props 50 are positioned such that the molding of the props 50 and the valve member 30 is started after the molding of the tread mold 11 and the props 50 is started. In this manner, the valve member 30 can be held securely by the tread mold 11 via the props 50 in the molding of the valve member 30 by the additive fabrication apparatus 40.

Thus, with the spherical props 50 placed in the clearance F, an air discharge means 15 which functions reliably can be created inside the mold in the additive fabrication of the mold by the additive fabrication apparatus 40 without bothering with the lamination direction. It is to be noted that the props 50 should be placed in the clearance F5 as close to the back surface 11b side as practicable. This will avoid the eventual treatment of the tread mold 11 as defective when the faulty removal of any of the props 50 has caused damage to part of the hole 20 or the valve member 30. In this manner, by a simple technique, the props 50 can be molded together with the tread mold 11, and furthermore the valve member 30 can be molded in linkage with the props 50. Therefore, the props 50 can be easily removed by giving a slight shock to the valve member 30 with a punch or the like after the molding of the tread mold 11. Thus, there will be almost no difference in man-hours required in mold manufacture even when the props 50 are placed in the clearance F5.

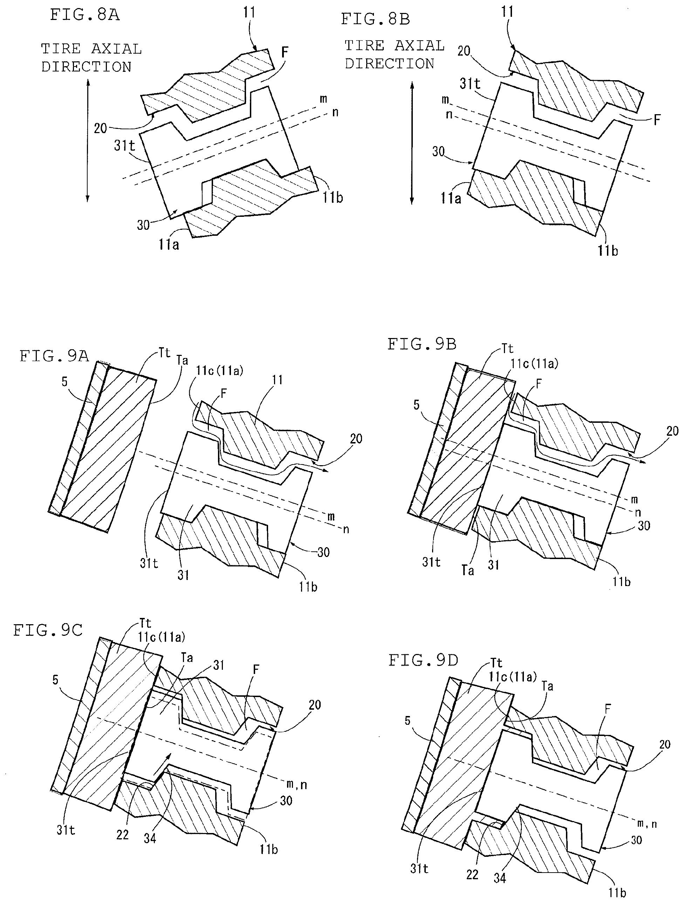

The side molds 9, 9 and the tread molds 11 forming a molding space are formed wholly with three-dimensional curved surfaces. Accordingly, the axis line m of the hole 20 of the air discharge means 15 created in the mold is inclined relative to the vertical direction in most cases. As shown in FIGS. 8A and 8B, the valve member 30 inside the hole 20 maintains the clearance F communicating from the molding surface 11a side to the back surface 11b side in a state such that the axis line n of the valve member 30 is dislocated from the axis line m of the hole 20. More specifically, when the air discharge means 15 is positioned on the lower side of the tread mold 11, the valve member 30, as shown in FIG. 8A, moves toward the lower side of the hole 20 so that the axis line n is in parallel with the axis line m of the hole 20 with the lead-out part 33 facing lower side. When the air discharge means 15 is positioned on the upper side of the tread mold 11, the valve member 30, as shown in FIG. 8B, moves toward the lower side of the hole 20 so that the axis line n is in parallel with the axis line m of the hole 20 with the lead-in part 31 facing lower side.

FIG. 9 shows the movement of an air discharge means 15 in the state as shown in Fig. 8B during cure-molding of the tire. Hereinbelow, a description is given of the movement of the air discharge means 15 with reference to the illustrations.

Immediately after the start of curing, as shown in FIG. 9A, there exists air between the outer surface Ta of the uncured tire T and the contact area molding section 12 of the molding surface 11a of the tread mold 11. With the bladder 5 disposed on the inner surface Tb side of the tire T being inflated from this state, the tire T is pressed toward the molding surface 11a of tread mold 11. And the air that has initially existed between the outer surface Ta of the tire T and the molding surface 11a is gradually discharged to the back surface 11b side, passing through the clearance F of the air discharge means 15.

As shown in FIG. 9B, as the inflation of the bladder 5 progresses, most of the air is discharged from between the outer surface Ta of the tire T and the molding surface 11a. Then the outer surface Ta of the tire T comes in contact with the end surface 31t on the lead-in part 31 side of the valve member 30. And, as shown in FIG. 9C, as the pressure of the bladder 5 pushes the tire T further against the molding surface 11a, the valve member 30 is pushed into the inflow area 21 of the hole 20. That is, since the sealing portion 34 of the lead-in part 31 of the valve member 30 and the valve seat area 22 of the hole 20 are both conically tapered, the valve member 30 moves along the slope of the valve seat area 22 such that the axis line n of the valve member 30 becomes coaxial with the axis line m of the hole 20, as the tire T pushes the lead-in part 31 in the direction of the axis line n of the hole 20. As a result, the clearance F2 of the clearance F is closed with the valve seat area 22 coming in contact with the sealing portion 34 of the lead-in part 31. This blocks the flow of air from the molding surface 11a side to the back surface 11b side.

As shown in FIG. 9D, with the pressure of the bladder 5 continuing, the tire T is pushed against the tread mold 11. Consequently, rubber enters in the annular clearance F1 between the peripheral surface 31a of the lead-in part 31 of the valve member 30 and the cylindrical surface of the inflow area 21 of the hole 20. However, since the clearance F2 is closed with the rubber pressing the lead-in part 31 of the valve member 30, the rubber no longer advances deeper than the clearance F1. Curing progresses in this condition, and the whole cure-molding comes to an end after the lapse of predetermined time.

In this manner, the tire T pushes the valve member 30 toward the back surface 11b after the intended discharge of air, and then the clearance F2 is closed with the sealing surface 31b of the valve member 30 pressed against the valve seat area 22 of the hole 20. As a result, the height of a spew formed on the outer surface Ta of the tire T during the molding of the tire can be set, for instance, to about0.5 mm, which is equivalent to the height of the peripheral surface 31a of the lead-in part 31 of the valve member 30. This will save the need for subsequent spew removal process and disposal of spews.

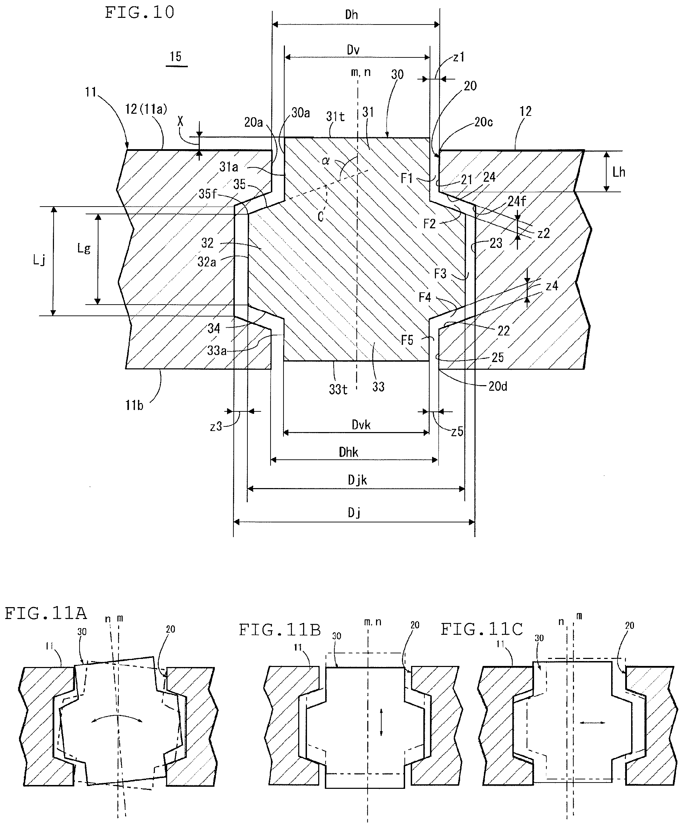

FIG. 10 is a cross-sectional view of another embodiment of an air discharge means 15 to be set at designing of the tread mold 11. The air discharge means 15 may be constructed in a barrel shape as shown in FIG. 10, for instance, in the place of the shape as described in the foregoing embodiment. That is, a barrel shape may be chosen instead of an hourglass shape of the hole wall 20a of the hole 20 and the peripheral surface 30a of the valve member 30 of the foregoing embodiment. Hereinbelow, a description is given of the other embodiment of the air discharge means 15 with respect to FIG. 10.

The air discharge means 15 has a hole 20, which penetrates from the contact area molding section 12 of the molding surface 11a of the tread mold 11 to the back surface 11b on the reverse side of the molding surface 11a, and a valve member, which controls the flow of air from the molding surface 11a side to the back surface 11b side. The hole 20 is formed, for instance, into a circular hole whose axis line m extends along the normal direction of the contact area molding section 12. The hole 20 has an inflow area 21 on the molding surface 11a side, a bumping area 24, an intermediate area 23, a valve seat area 22, and a discharge area 25 on the back surface 11b side. The inflow area 21 is provided as a cylindrical surface having an opening edge 20c with the molding surface 11a. The cylindrical surface of the inflow area 21 is so set as to have the diameter Dh and the depth Lh in the axis line direction of predetermined dimensions.

The bumping area 24, continuing from the intermediate area 23, is provided as an annular tapered surface, with the diameter increasing conically from the inflow area 21 toward the discharge area 25, extending toward the back surface 11b side along the axis line m of the cylindrical surface of the inflow area 21. A predetermined inclined angle *α* is set for the bumping area 24. It is to be noted that the inclined angle *α* is whichever larger of the intersecting angles between the virtual extended line C of the generating line of the engaging portion 35 and the axis line m. The intermediate area 23, continuing from the periphery of the bumping area 24, is provided as a cylindrical surface extending toward the back surface 11b side along the axis line m of the cylindrical surface of the inflow area 21 from the outer peripheral edge 24f of the bumping area 24. The diameter Dj of the intermediate area 23 is formed larger than the diameter of the inflow area 21.

The valve seat area 22, connecting to the intermediate area 23, is provided as an annular tapered surface whose diameter reduces conically from the inflow area 21 toward the discharge area 25. The axis line of the valve seat area 22 is coaxial with the axis line m of the cylindrical surface of the inflow area 21. A predetermined inclined angle *α*, which is the same as the inclined angle *α* of the bumping area 24, is set for the valve seat area 22. The discharge area 25, formed into a recess sinking from the back surface 11b toward the molding surface 11a side, has an opening edge 20d with the back surface 11b. The discharge area 25 is provided as a cylindrical surface connecting to the inner periphery of the valve seat area 22. The axis line of the discharge area 25 is coaxial with the axis line m of the cylindrical surface of the inflow area 21. The hole 20 is barrel-shaped as viewed in cross section along the axis line m, with the diameter Dh of the cylindrical surface of the inflow area 21 and the diameter Dhk of the cylindrical surface of the discharge area 25 formed smaller than the diameter Dj of the intermediate area 23.

The valve member 30, designed with the axis line n to be coaxial with the axis line m of the hole 20, is formed in a barrel shape such that the outer shape thereof approximately traces the inner peripheral shape of the hole 20. The valve member 30 has a lead-in part 31, a trunk part 32, and a lead-out part 33. The lead-in part 31 is formed with a size that can be held within the inflow area 21 and having a peripheral surface 31a circular along the cylindrical surface of the inflow area 21. The diameter Dv of the peripheral surface 31a of the lead-in part 31 is so set as to provide an annular clearance F1 of a predetermined clearance dimension z1 between itself and the cylindrical surface of the inflow area 21. The end surface 31t on one-end side of the lead-in part 31 is so designed as to project from the molding surface 11a surrounding the inflow area 21 of the hole 20 by a predetermined projection height x. The projection height x is so set that the end surface 31t is flush with the contact area molding section 12 of the molding surface 11a when the valve member 30 blocks the flow of air through the hole 20. The end surface 31t is formed into a plane surface or a curved surface along the contact area molding section 12 of the molding surface 11a in which the hole 20 is formed.

Formed on the other-end side of the lead-in part 31 is a engaging portion 35. The engaging portion 34, continuing from the peripheral surface 31a of the lead-in part 31, is provided as an annular tapered surface whose diameter increases conically from the lead-in part 31 toward the lead-out part 33. The engaging portion 35 is so set that the axis line thereof is coaxial with the axis line n of the lead-in part 31. And the engaging portion 35 prevents the valve member 30 from falling out of the hole 20 by bumping against the bumping area 24 provided in the hole 20. The engaging portion 35 is set to the same inclined angle *α* as the valve seat area 22 of the inflow area 21 and is so designed as to provide an annular clearance F2 of a predetermined clearance dimension z2 between itself and the valve seat area 22.

The trunk part 32 extends from the outer peripheral edge 35f of the engaging portion 35 as a shank body having a circular cross section coaxial with the axis line n of the lead-in part 31. The diameter Djk of the trunk part 32 is so set as to provide an annular clearance F3 of a predetermined clearance dimension z3 between the peripheral surface 32a of the trunk part 32 and the cylindrical surface of the intermediate area 23. Also, the length Lg of the trunk part 32 is set longer than the length Lj of the cylindrical surface of the intermediate area 23 of the hole 20.

The lead-out part 33 is formed into a circular disk having the peripheral surface 33a thereof smaller in diameter than the cylindrical surface of the discharge area 25. The end surface 33t on the back surface 11b side of the lead-out part 33 is formed into a plane surface, for instance. Also, formed on the other-end side is an sealing portion 34. The sealing portion 34, continuing from the peripheral surface 32a of the trunk part 32, is provided as an annular tapered surface whose diameter decreases conically toward the lead-out part 33. The sealing portion 34 is so set that the axis line thereof is coaxial with the axis line m of the lead-in part 31. The sealing portion 34 functions as a valve for blocking the flow of air inside between itself and the valve seat area 22 of the hole 22. The sealing portion 34 is formed with the same inclined angle *α* as the valve seat area 22 of the discharge area 25 and is so designed as to provide an annular clearance F4 of a predetermined clearance dimension z4 between itself and the valve seat area 22.

The diameter Dvk of the lead-out part 33 is so set as to provide an annular clearance F5 of a predetermined clearance dimension z5 between the peripheral surface 33a of the lead-out part 33 and the cylindrical surface of the discharge area 25 of the hole 20.

In other words, the valve member 30 is constructed as a single continuous peripheral surface 30a having the peripheral surface 31a of the lead-in part 31, the engaging portion 35, the peripheral surface 32a of the trunk part 32, the sealing portion 34, and the peripheral surface 33a of the lead-out part 33. The valve member 30 is barrel-shaped as viewed in cross section along the axis line n, with the diameter of the peripheral surface 31a of the lead-in part 31 and the diameter of the peripheral surface 33a of the lead-out part 33 formed smaller than the diameter of the peripheral surface 31a of the trunk part 32. Accordingly, a single continuous annular clearance F consisting of annular clearances F1 to F5 of predetermined dimensions is formed between the peripheral surface 30a of the valve member 30 and the hole wall 20a of the hole 20. This clearance F communicates with the molding space on the molding surface 11a side and the space on the back surface 11b.

As described already, a clearance F of a predetermined dimension is provided between the peripheral surface 30a of the valve member 30 and the hole wall 20a of the hole 20 of the air discharge means 15. As a result, as shown in FIG. 11A, the valve member 30 swings inside the hole 20 such that the axis line n tilts in relation to the axis line m of the hole 20. Also, as shown in FIG. 11B, the valve member 30 moves along the axis line m of the hole 20. And, as shown in FIG. 11C, the valve member 30 moves in parallel with the axis line m of the hole 20.

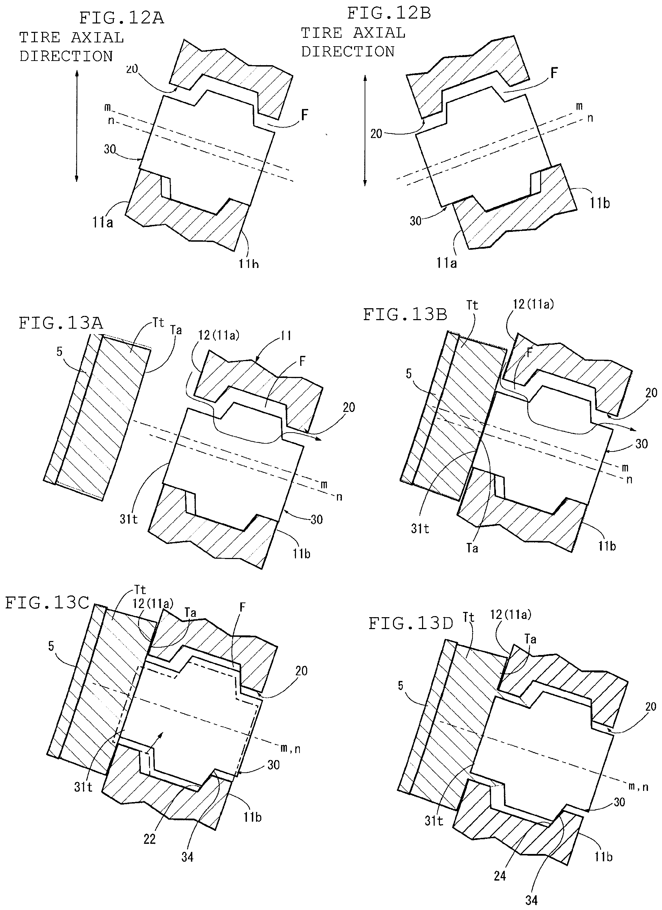

The side molds 9, 9 and the tread molds 11 forming a molding space are formed wholly with three-dimensional curved surfaces. Accordingly, the axis line m of the hole 20 of the air discharge means 15 created in the mold is inclined relative to the vertical direction in most cases. As shown in FIGS. 12A and 12B, the valve member 30 inside the hole 20 maintains the clearance F communicating from the molding surface 11a side to the back surface 11b side in a state such that the axis line n of the valve member 30 is dislocated from the axis line m of the hole 20. More specifically, when the air discharge means 15 is positioned on the lower side, the valve member 30, as shown in FIG. 12A, moves toward the lower side of the hole 20 so that the axis line n is in parallel with the axis line m of the hole 20 with the lead-out part 33 facing lower side. When the air discharge means 15 is positioned on the upper side, the valve member 30, as shown in FIG. 12B, moves toward the lower side of the hole 20 so that the axis line n is in parallel with the axis line m of the hole 20 with the lead-in part 31 facing lower side.

FIG. 13 shows the movement of the air discharge means 15 in the state as shown in Fig. 12A during curing of the tire. Hereinbelow, a description is given of the movement of the air discharge means 15 with reference to FIG. 13.

Immediately after the start of curing, as shown in FIG. 13A, there exists air between the outer surface Ta of the uncured tire T placed inside the molding space and the contact area molding section 12 of the molding surface 11a of the tread mold 11. With the bladder 5 disposed on the inner surface Tb side of the tire T being inflated from this state, the tire T is pressed toward the molding surface 11a of tread mold 11. And the air that has initially existed between the outer surface Ta of the tire T and the molding surface 11a is gradually discharged to the back surface 11b side, passing through the clearance F of the air discharge means 15.

As shown in FIG. 13B, as the inflation of the bladder 5 progresses, most of the air is discharged from between the outer surface Ta of the tire T and the molding surface 11a. Then the outer surface Ta of the tire T comes in contact with the end surface 31c on the lead-in part 31 side of the valve member 30. And, as shown in FIG. 13C, as the pressure of the bladder 5 further pushes the tire T against the molding surface 11a, the valve member 30 is pushed into the inflow area 21 of the hole 20 such that the axis line n of the valve member 30 becomes coaxial with the axis line m of the hole 20. That is, since the sealing portion 34 of the valve member 30 and the valve seat area 22 of the hole 20 are both conically tapered, the valve member 30 moves along the slope of the valve seat area 22 of the hole 20 as the tire T pushes the lead-in part 31 in the direction of the axis line n of the hole 20. As a result, the clearance F4 of the clearance F is closed with the valve seat area 22 coming in contact with the sealing portion 34. This blocks the flow of air from the molding surface 11a side to the back surface 11b side.

As shown in FIG. 13D, with the pressure of the bladder 5 continuing, the tire T is pushed against the tread mold 11. This will urge rubber to enter into the clearance F2 and the clearance F3, passing through the annular clearance F1 between the peripheral surface 31a of the lead-in part 31 of the valve member 30 and the cylindrical surface of the inflow area 21 of the hole 20. However, since the clearance F4 is closed with the rubber pressing the lead-in part 31 of the valve member 30, the air in the clearance F2 and the clearance F3 stays behind without being discharged. This remaining air prevents the rubber having entered the clearance F1 from entering further than the clearance F1. Curing progresses in this condition, and the whole cure-molding comes to an end after the lapse of predetermined time.

In this manner, the tire T pushes the valve member 30 toward the back surface 11b after the intended discharge of air, and then the clearance F4 is closed with the sealing portion 34 of the valve member 30 pressed against the valve seat area 22 of the hole 20. As a result, the height of a spew formed on the outer surface Ta of the tire T during the molding of the tire can be set, for instance, to about 0.5 mm, which is equivalent to the height of the lead-in part 31. This will save the need for subsequent spew removal process and disposal of spews.

According to the present invention, the discharge means 15 is molded integrally with the mold by an additive fabrication process. This makes the subsequent process performed conventionally unnecessary. It is believed that a total of about 1,000 air discharge means 15 is required by the upper and lower side molds 9, 9 and a plurality of tread molds 11 for molding a tire T. If these air discharge means 15 are to be formed using a conventional drill, the time to be taken to drill a single hole may be about 30 to 50 seconds, which means that this invention shortens the manufacturing time by a total of 500 to 830 minutes.

Also, adjustment of the height of the cylindrical surface of the inflow area 21 of the hole 20 can improve the appearance of the tire T by controlling the length of a spew that is formed on the outer surface Ta of the tire T after cure-molding. This will make it unnecessary to perform the process of removing spews, thereby eliminating the man-hours required for disposal of the spews from the man-hours taken in the production of the tire T. Also, the absence of rubber remnants after the removal of spews will improve the initial performance of the tire.

In the foregoing embodiments, descriptions have been given of the cross-sectional shape of the hole 20 and the valve member 30 of the air discharge means 15 as being circular. However, the cross-sectional shape thereof may be polygonal, such as triangular, square, and even star-shaped. In such cases, the dimensions of the parts of the hole 20 and the parts of the valve member 30 may be set based on the circumscribed circle or the inscribed circle of the polygonal shape.

Also, in the foregoing embodiments, descriptions have been given such that the axis line of the cylindrical surface of the inflow area 21, the valve seat area 22, the cylindrical surface of the intermediate area 23, the bumping area 24, and the cylindrical surface of the discharge area 25 of the hole 20 is positioned on the axis line m of the cylindrical surface. However, it may be so arranged that the axis line thereof extends along the axis line m but positionally dislocated from the axis line m.

Also, in the foregoing embodiments, descriptions have been given such that the axis line of the peripheral surface 31a of the lead-in part 31, the sealing portion 34, the trunk part 32, the engaging portion, and the cylindrical surface of the lead-out part 33 of the valve member 30 is positioned on the axis line n of the lead-in part 31. However, it may be so arranged that the axis line thereof extends along the axis line n and positionally dislocated from the axis line n. In such a case, care must be taken that when the sealing portion 34 of the valve member 30 is seated on the valve seat area 22 of the hole 20, the other regions of the valve member 30 do not come in contact with the interior of the hole 20.

In this manner, an imbalance between the valve member 30 and the hole 20 can be created by allowing dislocation between the axis line of the respective parts of the hole 20 and the axis line of the respective parts of the valve member 30. For example, the axis line n of the valve member 30 is at a tilt even when the axis line m of the cylindrical surface of the inflow area 21 of the hole 20 is oriented in the vertical direction. This will make it easier to secure a clearance F between the hole 20 and the valve member 30.

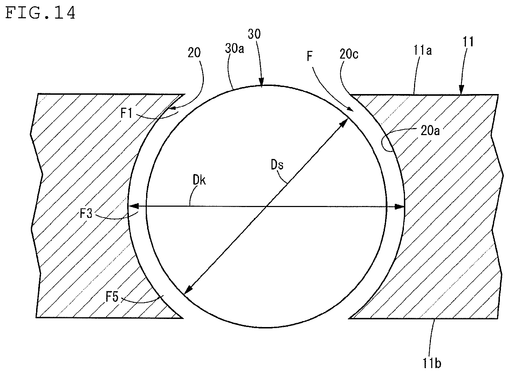

Also, another embodiment of the air discharge means 15 may be constructed as shown in FIG. 14. As shown in FIG. 14, the air discharge means 15 is constructed such that a spherical valve member 30 having a diameter Ds smaller by a predetermined dimension than the diameter Dk of the hole 20 is provided within the hole 20 formed spherically in the tread mold 11, which is the external part thereof, so as to form a clearance F therebetween.

By the construction of the air discharge means 15 as described above, too, the clearance F that serves as an air discharge passage by communicating from the molding surface 11a side to the back surface 11b side can be formed between the hole walls 20a of the hole 20 and the peripheral surface 30a of the valve member 30. Thus the air can be discharged from the molding surface 11a side to the back surface 11b side. Also, when the valve member 30 is pushed by the tire surface after the air has been discharged from the molding surface 11a side with the progress of cure-molding, the communication between the molding surface 11a side and the back surface 11b side is cut off with the valve member 30 pressed against the opening of the hole 20 on the back surface 11b side. This will prevent rubber from entering into the clearance F. As a result, formation of spews on the tire surface immediately after cure-molding will be controlled, thereby making it unnecessary to perform the process of spew removal from the tire surface and improving the appearance quality of the tire surface.

It is to be noted that in the foregoing embodiments, descriptions have been given of molds for cure-molding tires. However, the molds are not limited to those in tire manufacturing, but may be molds to be used in the molding of other rubber articles, such as rubber crawlers and rubber vibration isolators.

Also, in the foregoing embodiments, descriptions have been given of formation of a mold as a three-dimensional object by sintering metal powder by directing a laser beam thereto . However, it is possible to direct an LED beam from a semiconductor of a semiconductor laser in the place of an ordinary laser beam as described above. Thus, an energy source, including any light beam for sintering metal powder, may be selected according to the properties of the metal powder to be sintered.

Also, the material for constituting the mold is not limited to the metal powder as described so far, but may be resin powder, such as synthetic resin, ceramics or ceramic powder, which is an inorganic sintered material, or a composite material powder, which is a mixture of resin powder, ceramic powder, and metallic powder.

One arrangement of a rubber article mold according to the invention is a rubber article mold having air discharge portions for discharging air from a molding-surface side for molding a rubber article to a back-surface side. Each air discharge portion includes a hole penetrating from a molding surface to a back surface of the rubber article mold and a valve member disposed within the hole in such a manner as to provide a predetermined clearance between the valve member and a hole wall forming the hole. And the hole has an inflow area where the air from the molding-surface side flows in, a discharge area where the air having flowed in from the inflow area is discharged to the back-surface side, and an intermediate area communicating with the inflow area and the discharge area and smaller in diameter than the inflow area and the discharge area. And the valve member has a lead-in part on the molding-surface side, a lead-out part on the back-surface side, and a trunk part connecting the lead-in part with the lead-out part and smaller in diameter than the lead-in part and the lead-out part.

Also, another arrangement of a rubber article mold according to the invention is a rubber article mold having air discharge portions for discharging air from a molding-surface side for molding a rubber article to a back-surface side. Each air discharge portion includes a hole penetrating from a molding surface to a back surface of the rubber article mold and a valve member disposed within the hole in such a manner as to provide a predetermined clearance between the valve member and ahole wall forming the hole. And the hole has an inflow area where the air from the molding-surface side flows in, a discharge area where the air having flowed in from the inflow area is discharged to the back-surface side, and an intermediate area communicating with the inflow area and the discharge area and larger in diameter than the inflow area and the discharge area. And the valve member has a lead-in part on the molding-surface side, a lead-out part on the back-surface side, and a trunk part connecting the lead-in part with the lead-out part and larger in diameter than the lead-in part and the lead-out part.

By use of the arrangements as described above, the process of cutting spews of the rubber article after molding can be made unnecessary, and the appearance of the surface of the rubber article can be improved.

Also, still another arrangement of a rubber article mold according to the invention is a rubber article mold having air discharge portions for discharging air from a molding-surface side for molding a rubber article to a back-surface side. Each air discharge portion includes a hole penetrating from a molding surface to a back surface of the rubber article mold and a valve member disposed within the hole in such a manner as to provide a predetermined clearance between the valve member and a hole wall forming the hole and controlling passage of air to the back-surface side. And the hole has a cylindrical inflow area which opens on the molding surface and where the air from the molding-surface side flows in, a discharge area which opens on the back surface and where the air having flowed in from the inflow area is discharged, an intermediate area communicating with the inflow area and the discharge area and smaller in diameter than the inflow area and the discharge area, an annular valve seat area disposed at an end on an inflow-area side of the intermediate area and having the diameter reducing gradually to the diameter of the intermediate area, and a bumping area disposed at an end on a discharge-area side of the intermediate area and having a diameter increasing gradually from the diameter of the intermediate area. And the valve member has a lead-in part formed in a size capable of being held inside the inflow area and forming an annular clearance of a predetermined dimension between a periphery thereof and a hole wall of the inflow area, a trunk part smaller in diameter than the intermediate area and longer in length than the intermediate area, an annular sealing portion formed smaller in diameter than the valve seat area at an end on the inflow-area side of the trunk part to block, with the valve seat area, the flow of air passing from the molding surface to the back surface, and an engaging portion having a size by which the engaging portion bumps against the bumping area at an end on the discharge-area side of the trunk part so as not to be able to enter into the intermediate portion.

According to this arrangement, the valve member is freely movable within the hole. Hence, unwanted air can be discharged through the clearance created between the periphery of the valve member and the hole wall of the hole. At the same time, the flow of air through the hole is blocked off with the sealing portion of the valve member coming in close contact with the valve seat area of the hole as the surface of the rubber article during curing pushes the lead-in part of the valve member. Also, with the hole sealed by the valve seat area of the hole and the sealing portion of the valve member, part of the hole where the rubber can enter will be limited to the annular clearance portion created between the periphery of the lead-in part and the hole wall of the inflow area only. This will control the formation of spews on the rubber article surface after cure-molding. As a result, the process of spew removal from the tire surface can be made unnecessary, and the appearance of the tire surface can be improved.

Also, yet another arrangement of a rubber article mold according to the invention is a rubber article mold having air discharge portions for discharging air from a molding-surface side for molding a rubber article to a back-surface side. Each air discharge portion includes a hole penetrating from a molding surface to a back surface of the rubber article mold and a valve member disposed within the hole in such a manner as to provide a predetermined clearance between the valve member and a hole wall forming the hole and controlling passage of air to the back-surface side. And the hole has a cylindrical inflow area which opens on the molding surface and where the air from the molding-surface side flows in, a discharge area which opens on the back surface and where the air having flowed in from the inflow area is, an intermediate area connecting the inflow area with the discharge area and larger in diameter than the inflow area and the discharge area, a bumping area disposed at an end on the inflow-area side of the intermediate area and having a diameter increasing gradually to the diameter of the intermediate area, an annular valve seat area disposed at an end on the discharge-area side of the intermediate area and having a diameter reducing gradually from the diameter of the intermediate area. And the valve member has a lead-in part formed in a size capable of being held inside the inflow area and forming an annular clearance of a predetermined dimension between a periphery thereof and a hole wall of the inflow area, a trunk part smaller in diameter than the intermediate area and shorter in length than the intermediate area, an engaging portion disposed at an end on the inflow-area side of the trunk part and formed to bump against the bumping area so as not to be able to enter into the inflow area, and an annular sealing portion disposed at an end on the discharge-area side of the trunk part and formed smaller in diameter than the valve seat area to block, with the valve seat area, the flow of air passing from the molding surface to the back surface.

According to this arrangement, the valve member is freely movable within the hole. Hence, unwanted air can be discharged through the clearance created between the periphery of the valve member and the hole wall of the hole. At the same time, the flow of air through the hole is blocked off with the sealing portion of the valve member coming in close contact with the valve seat area of the hole as the surface of the rubber article during curing pushes the lead-in part of the valve member. Also, with the hole sealed by the valve seat area of the hole and the sealing portion of the valve member, part of the hole where the rubber can enter will be limited to the annular clearance portion created between the periphery of the lead-in part and the hole wall of the inflow area only. This will control the formation of spews on the rubber article surface after cure-molding. As a result, the process of spew removal from the tire surface can be made unnecessary, and the appearance of the tire surface can be improved.

Also, still another arrangement of a rubber article mold according to the invention is a rubber article mold in which an end surface on the molding surface side of the lead-in part is flush with the molding surface when the sealing portion is seated on the valve seat area. This will make the surface of the rubber article after molding smooth.

Also, still another arrangement of a rubber article mold according to the invention is a rubber article mold in which the clearance dimension of the annular clearance is larger than 0 mm and smaller than 0.5 mm. As a result, the spews to be formed by the air vent holes will disappear altogether or intermittently. This will save the need for cutting off the spews.

Moreover, by making the clearance dimension of the air vent hole even smaller than 0.06 mm, there will be little entry of rubber into the air vent hole, and thus air only can be discharged therethrough. Accordingly, when a tire, which is one of the rubber articles under consideration, the appearance and motion performance of the tire can be improved markedly.

Also, yet another arrangement of a rubber article mold according to the invention is a rubber article mold in which the hole and the valve member are formed by an additive fabrication process. As a result, the air discharge portions featuring a construction which could not be manufactured by the other manufacturing methods can be formed, and at the same time the time for manufacturing the mold can be shortened.

The method for manufacturing a rubber article mold according to the invention is a method for manufacturing the rubber article mold as recited in any (1) to (7) by an additive fabrication process. The method includes casting a laser beam at metal powder and laminating sintered layers. In the method, interlinking pieces interlinking the hole wall and the valve member by coming in contact with the hole wall forming the hole and the periphery of the valve member are molded simultaneously on a lower layer side in a lamination direction of the sintered layers within the clearance continuing from the molding-surface side to the back-surface side. Hence, the valve members can be molded accurately and reliably by preventing them from moving during the molding by the additive fabrication process.

Also, another method for manufacturing a rubber article mold according to the invention is a method in which the interlinking pieces are each spherical. As a result, the valve members can be interlinked easily to the holes in the mold, and the valve members can be molded accurately and reliably. At the same time, after the molding, the interlinking pieces can be removed from the holes and the valve members quite easily.

Also, still another method for manufacturing a rubber article mold according to the invention is a method in which the lead-in part of the valve member protrudes above the molding surface. Hence, the protrusion of the valve members above the molding surface makes it easy to remove the interlinking pieces by tapping the valve members.

### Description of Reference Numerals

- 9: side mold
- 11: tread mold
- 11a: molding surface
- 11b: back surface
- 12: contact area molding section
- 15: air discharge means
- 20: hole
- 21: inflow area
- 22: valve seat area
- 23: intermediate area
- 24: bumping portion
- 25: discharge area
- 30: valve member
- 31: lead-in part
- 32: trunk part
- 33: lead-out part
- 34: sealing portion
- 35: engaging portion
- F: F1 to F5: clearance
- T: tire

## Claims

1. A rubber article mold (11) having air discharge means (15) for discharging air from a molding-surface (11a) side for molding a rubber article to a back-surface (11b) side, the air discharge means (15) comprising:
a hole (20) penetrating from a molding surface (11a) to a back surface (11b) of the rubber article mold (11); and
a valve member (30) disposed within the hole (20) in such a manner as to provide a predetermined clearance (F) between the valve member (30) and a hole wall forming the hole (20),
wherein the hole (20) has an inflow area (21) where the air from the molding-surface (11a) side flows in, a discharge area (25) where the air having flowed in from the inflow area (21) is discharged to the back-surface (11b) side, and an intermediate area (23) communicating with the inflow area (21) and the discharge area (25) and smaller in diameter than the inflow area (21) and the discharge area (25), and
wherein the valve member (30) has a lead-in part (31) on the molding-surface (11a) side, a lead-out part (33) on the back-surface (11b) side, and a trunk part (32) connecting the lead-in part (31) with the lead-out part (33) and smaller in diameter than the lead-in part (31) and the lead-out part (33),
**characterised in that**:
the hole (20) and the valve member (30) are obtainable by an additive fabrication process, comprising:
casting a laser beam at metal powder and laminating sintered layers,
wherein interlinking pieces (50) interlinking the hole (20) wall and the valve member (30) by coming in contact with the hole (20) wall forming the hole (20) and the periphery of the valve member (30) are formed simultaneously on a lower layer side in a lamination direction of the sintered layers within the clearance (F) continuing from the molding-surface (11a) side to the back-surface (11b) side.

2. A rubber article mold (11) having air discharge means (15) for discharging air from a molding-surface (11a) side for molding a rubber article to a back-surface (11b) side, the air discharge means (15) comprising:
a hole (20) penetrating from a molding surface (11a) to a back surface (11b) of the rubber article mold; and
a valve member (30) disposed within the hole (20) in such a manner as to provide a predetermined clearance (F) between the valve member (30) and a hole wall forming the hole (20),
wherein the hole (20) has an inflow area (21) where the air from the molding-surface (11a) side flows in, a discharge area (25) where the air having flowed in from the inflow area (21) is discharged to the back-surface (11b) side, and an intermediate area (23) communicating with the inflow area (21) and the discharge area (25) and larger in diameter than the inflow area (21) and the discharge area (25), and
wherein the valve member (30) has a lead-in part (31) on the molding-surface (11a) side, a lead-out part (33) on the back-surface (11b) side, and a trunk part (32) connecting the lead-in part (31) with the lead-out part (33) and larger in diameter than the lead-in part (31) and the lead-out part (33),
wherein:
the hole (20) and the valve member (30) are obtainable by an additive fabrication process, comprising:
casting a laser beam at metal powder and laminating sintered layers,
wherein interlinking pieces (50) interlinking the hole (20) wall and the valve member (30) by coming in contact with the hole (20) wall forming the hole (20) and the periphery of the valve member (30) are formed simultaneously on a lower layer side in a lamination direction of the sintered layers within the clearance (F) continuing from the molding-surface (11a) side to the back-surface (11b) side.

3. A rubber article mold (11) having air discharge means (15) for discharging air from a molding-surface (11a) side for molding a rubber article to a back-surface (11b) side, the air discharge means (15) comprising:
a hole (20) penetrating from a molding surface (11a) to a back surface (11b) of the rubber article mold; and
a valve member (30) disposed within the hole (20) in such a manner as to provide a predetermined clearance (F) between the valve member (30) and a hole wall forming the hole (20) and controlling passage of air to the back-surface (11b) side,
wherein the hole (20) has a cylindrical inflow area (21) which opens on the molding surface (11a) and where the air from the molding-surface (11a) side flows in, a discharge area (25) which opens on the back surface (11b) and where the air having flowed in from the inflow area (21) is discharged, an intermediate area (23) communicating with the inflow area (21) and the discharge area (25) and smaller in diameter than the inflow area (21) and the discharge area (25), an annular valve seat area (22) disposed at an end on an inflow-area side of the intermediate area (23) and having the diameter reducing gradually to the diameter of the intermediate area (23), and a bumping area (24) disposed at an end on a discharge-area side of the intermediate area (23) and having a diameter increasing gradually from the diameter of the intermediate area (23), and
wherein the valve member (30) has a lead-in part (31) formed in a size capable of being held inside the inflow area (21) and forming an annular clearance (Fl) of a predetermined dimension between a periphery thereof and a hole (20) wall of the inflow area (21), a trunk part (32) smaller in diameter than the intermediate area (23) and longer in length than the intermediate area (23), an annular sealing portion (34) formed smaller in diameter than the valve seat area (22) at an end on the inflow-area side of the trunk part (32) to block, with the valve seat area (22), the flow of air passing from the molding surface (11a) to the back surface (11b), and an engaging portion (35) having a size by which the engaging portion (35) bumps against the bumping area (24) at an end on the discharge-area side of the trunk part (32) so as not to be able to enter into the intermediate portion,
wherein:
the hole (20) and the valve member (30) are obtainable by an additive fabrication process, comprising:
casting a laser beam at metal powder and laminating sintered layers,
wherein interlinking pieces (50) interlinking the hole (20) wall and the valve member (30) by coming in contact with the hole (20) wall forming the hole (20) and the periphery of the valve member (30) are formed simultaneously on a lower layer side in a lamination direction of the sintered layers within the clearance (Fl) continuing from the molding-surface (11a) side to the back-surface (11b) side.

4. A rubber article mold (11) having air discharge means (15) for discharging air from a molding-surface (11a) side for molding a rubber article to a back-surface (11b) side, the air discharge means (15) comprising:
a hole (20) penetrating from a molding surface (11a) to a back surface (11b) of the rubber article mold; and
a valve member (30) disposed within the hole (20) in such a manner as to provide a predetermined clearance (F) between the valve member (30) and a hole wall forming the hole (20) and controlling passage of air to the back-surface (11b) side,
wherein the hole (20) has
a cylindrical inflow area (21) which opens on the molding surface (11a) and where the air from the molding-surface (11a) side flows in,
a discharge area (25) which opens on the back surface (11b) and where the air having flowed in from the inflow area (21) is discharged,
an intermediate area (23) communicating with the inflow area (21) and the discharge area (25) and larger in diameter than the inflow area (21) and the discharge area (25),
a bumping area (24) disposed at an end on the inflow-area side of the intermediate area (23) and having a diameter increasing gradually to the diameter of the intermediate area (23),
an annular valve seat area (22) disposed at an end on the discharge-area side of the intermediate area (23) and having a diameter reducing gradually from the diameter of the intermediate area (23), and
wherein the valve member (30) has
a lead-in part (31) formed in a size capable of being held inside the inflow area (21) and forming an annular clearance (Fl) of a predetermined dimension between a periphery thereof and a hole (20) wall of the inflow area (21),
a trunk part (32) smaller in diameter than the intermediate area (23) and shorter in length than the intermediate area (23),
an engaging portion (35) disposed at an end on the inflow-area side of the trunk part (32) and formed to bump against the bumping area (24) so as not to be able to enter into the inflow area (21), and
an annular sealing portion (34) disposed at an end on the discharge-area side of the trunk part (32) and formed smaller in diameter than the valve seat area (22) to block, with the valve seat area (22), the flow of air passing from the molding surface (11a) to the back surface (11b),
wherein:
the hole (20) and the valve member (30) are obtainable by an additive fabrication process, comprising:
casting a laser beam at metal powder and laminating sintered layers,
wherein interlinking pieces (50) interlinking the hole (20) wall and the valve member (30) by coming in contact with the hole (20) wall forming the hole (20) and the periphery of the valve member (30) are formed simultaneously on a lower layer side in a lamination direction of the sintered layers within the clearance (F) continuing from the molding-surface (11a) side to the back-surface (11b) side.

5. The rubber article mold (11) according to claims 3 or claim 4, wherein an end surface on the molding surface (11a) side of the lead-in part (31) is flush with the molding surface (11a) when the sealing portion (34) is seated on the valve seat area (22).

6. The rubber article mold (11) according to any of claims 3 to 5, wherein the clearance dimension of the annular clearance (Fl) is larger than 0 mm and smaller than 0.5 mm.

7. The rubber article mold (11) according to any of claims 2 to 6, wherein the hole (20) and the valve member (30) are formed by an additive fabrication process.

8. A method for manufacturing the rubber article mold as recited in any of claims 1 to 7 by an additive fabrication process, comprising:
casting a laser beam at metal powder and laminating sintered layers,
wherein interlinking pieces interlinking the hole (20) wall and the valve member (30) by coming in contact with the hole (20) wall forming the hole (20) and the periphery of the valve member (30) are formed simultaneously on a lower layer side in a lamination direction of the sintered layers within the clearance (F) continuing from the molding-surface (11a) side to the back-surface (11b) side.

9. The method for manufacturing a rubber article mold according to claim 8, wherein the interlinking pieces are each spherical.

10. The method for manufacturing a rubber article mold according to claim 8 or claim 9, wherein the lead-in part (31) of the valve member (30) protrudes above the molding surface (11a).

## Patentansprüche

1. Gummiartikelform (11), die Luftauslassmittel (15) zum Auslassen von Luft von einer Seite einer Formungsfläche (11a) zum Formen eines Gummiartikels zu einer Seite einer hinteren Fläche (11b) aufweist, wobei die Luftauslassmittel (15) Folgendes umfassen:
ein Loch (20), das von einer Formungsfläche (11a) zu einer hinteren Fläche (11b) der Gummiartikelform (11) hindurchdringt, und
ein Ventilelement (30), das auf eine solche Weise innerhalb des Lochs (20) angeordnet ist, dass es einen vorbestimmten Freiraum (F) zwischen dem Ventilelement (30) und einer Lochwand, die das Loch (20) bildet, bereitstellt,
wobei das Loch (20) einen Einströmungsbereich (21), wo die Luft von der Seite der Formungsfläche (11a) einströmt, einen Auslassbereich (25), wo die Luft, die von dem Einströmungsbereich (21) eingeströmt ist, zu der Seite der hinteren Fläche (11b) ausgelassen wird, und einen Zwischenbereich (23), der mit dem Einströmungsbereich (21) und dem Auslassbereich (25) in Verbindung steht und im Durchmesser kleiner ist als der Einströmungsbereich (21) und der Auslassbereich (25), aufweist, und
wobei das Ventilelement (30) einen Einleitungsteil (31) auf der Seite der Formungsfläche (11a), einen Ausleitungsteil (33) auf der Seite der hinteren Fläche (11b) und einen Stammteil (32), der den Einleitungsteil (31) mit dem Ausleitungsteil (33) verbindet und im Durchmesser kleiner ist als der Einleitungsteil (31) und der Ausleitungsteil (33), aufweist,
**dadurch gekennzeichnet, dass**:
das Loch (20) und das Ventilelement (30) durch einen additiven Fertigungsprozess erhalten werden können, der Folgendes umfasst:
Werfen eines Laserstrahls auf Metallpulver und Schichten gesinterter Lagen,
wobei Verbindungsstücke (50), welche die Wand des Lochs (20) und das Ventilelement (30) dadurch miteinander verbinden, dass sie in Berührung mit der Wand des Lochs (20), die das Loch (20) bildet, und dem Umfang des Ventilelements (30) kommen, gleichzeitig auf einer Seite einer unteren Lage in einer Schichtungsrichtung der gesinterten Lagen innerhalb des Freiraums (F) geformt werden, wobei sie sich von der Seite der Formungsfläche (11a) zu der Seite der hinteren Fläche (11b) fortsetzen.

2. Gummiartikelform (11), die Luftauslassmittel (15) zum Auslassen von Luft von einer Seite einer Formungsfläche (11a) zum Formen eines Gummiartikels zu einer Seite einer hinteren Fläche (11b) aufweist, wobei die Luftauslassmittel (15) Folgendes umfassen:
ein Loch (20), das von einer Formungsfläche (11a) zu einer hinteren Fläche (11b) der Gummiartikelform hindurchdringt; und
ein Ventilelement (30), das auf eine solche Weise innerhalb des Lochs (20) angeordnet ist, dass es einen vorbestimmten Freiraum (F) zwischen dem Ventilelement (30) und einer Lochwand, die das Loch (20) bildet, bereitstellt,
wobei das Loch (20) einen Einströmungsbereich (21), wo die Luft von der Seite der Formungsfläche (11a) einströmt, einen Auslassbereich (25), wo die Luft, die von dem Einströmungsbereich (21) eingeströmt ist, zu der Seite der hinteren Fläche (11b) ausgelassen wird, und einen Zwischenbereich (23), der mit dem Einströmungsbereich (21) und dem Auslassbereich (25) in Verbindung steht und im Durchmesser größer ist als der Einströmungsbereich (21) und der Auslassbereich (25), aufweist, und
wobei das Ventilelement (30) einen Einleitungsteil (31) auf der Seite der Formungsfläche (11a), einen Ausleitungsteil (33) auf der Seite der hinteren Fläche (11b) und einen Stammteil (32), der den Einleitungsteil (31) mit dem Ausleitungsteil (33) verbindet und im Durchmesser größer ist als der Einleitungsteil (31) und der Ausleitungsteil (33), aufweist,
wobei:
das Loch (20) und das Ventilelement (30) durch einen additiven Fertigungsprozess erhalten werden können, der Folgendes umfasst:
Werfen eines Laserstrahls auf Metallpulver und Schichten gesinterter Lagen,
wobei Verbindungsstücke (50), welche die Wand des Lochs (20) und das Ventilelement (30) dadurch miteinander verbinden, dass sie in Berührung mit der Wand des Lochs (20), die das Loch (20) bildet, und dem Umfang des Ventilelements (30) kommen, gleichzeitig auf einer Seite einer unteren Lage in einer Schichtungsrichtung der gesinterten Lagen innerhalb des Freiraums (F) geformt werden, wobei sie sich von der Seite der Formungsfläche (11a) zu der Seite der hinteren Fläche (11b) fortsetzen.

3. Gummiartikelform (11), die Luftauslassmittel (15) zum Auslassen von Luft von einer Seite einer Formungsfläche (11a) zum Formen eines Gummiartikels zu einer Seite einer hinteren Fläche (11b) aufweist, wobei die Luftauslassmittel (15) Folgendes umfassen:
ein Loch (20), das von einer Formungsfläche (11a) zu einer hinteren Fläche (11b) der Gummiartikelform hindurchdringt; und
ein Ventilelement (30), das auf eine solche Weise innerhalb des Lochs (20) angeordnet ist, dass es einen vorbestimmten Freiraum (F) zwischen dem Ventilelement (30) und einer Lochwand, die das Loch (20) bildet, bereitstellt und den Durchgang von Luft zu der Seite der hinteren Fläche (11b) regelt,
wobei das Loch (20) einen zylindrischen Einströmungsbereich (21), der sich auf der Formungsfläche (11a) öffnet und wo die Luft von der Seite der Formungsfläche (11a) einströmt, einen Auslassbereich (25), der sich auf der hinteren Fläche (11b) öffnet und wo die Luft, die von dem Einströmungsbereich (21) eingeströmt ist, ausgelassen wird, einen Zwischenbereich (23), der mit dem Einströmungsbereich (21) und dem Auslassbereich (25) in Verbindung steht und im Durchmesser kleiner ist als der Einströmungsbereich (21) und der Auslassbereich (25), einen ringförmigen Ventilsitzbereich (22), der an einem Ende auf einer Einströmungsbereichsseite des Zwischenbereichs (23) angeordnet ist und einen Durchmesser aufweist, der sich allmählich auf den Durchmesser des Zwischenbereichs (23) verringert, und einen Anschlagsbereich (24), der an einem Ende auf einer Ausströmungsbereichsseite des Zwischenbereichs (23) angeordnet ist und einen Durchmesser aufweist, der sich allmählich von dem Durchmesser des Zwischenbereichs (23) vergrößert, aufweist, und
wobei das Ventilelement (30) einen Einleitungsteil (31), der in einer Größe geformt ist, die dazu in der Lage ist, innerhalb des Einströmungsbereichs (21) gehalten zu werden, und einen ringförmigen Freiraum (F1) mit einer vorbestimmten Abmessung zwischen einem Umfang desselben und einer Wand des Lochs (20) des Einströmungsbereichs (21) bildet, einen Stammteil (32), der im Durchmesser kleiner ist als der Zwischenbereich (23) und in der Länge länger als der Zwischenbereich (23), einen ringförmigen Abdichtungsabschnitt (34), der im Durchmesser kleiner als der Ventilsitzbereich (22) an einem Ende auf der Einströmungsbereichsseite des Stammteils (32) geformt ist, um, mit dem Ventilsitzbereich (22), den Luftstrom zu sperren, der von der Formungsfläche (11a) zu der hinteren Fläche (11b) hindurchgeht, und einen Eingriffsabschnitt (35), der eine Größe aufweist, durch die der Eingriffsabschnitt (35) an einem Ende auf der Ausströmungsbereichsseite des Stammteils (32) gegen den Anschlagsbereich (24) stößt, so dass er nicht dazu in der Lage ist, in den Zwischenabschnitt einzudringen, aufweist,
wobei:
das Loch (20) und das Ventilelement (30) durch einen additiven Fertigungsprozess erhalten werden können, der Folgendes umfasst:
Werfen eines Laserstrahls auf Metallpulver und Schichten gesinterter Lagen,
wobei Verbindungsstücke (50), welche die Wand des Lochs (20) und das Ventilelement (30) dadurch miteinander verbinden, dass sie in Berührung mit der Wand des Lochs (20), die das Loch (20) bildet, und dem Umfang des Ventilelements (30) kommen, gleichzeitig auf einer Seite einer unteren Lage in einer Schichtungsrichtung der gesinterten Lagen innerhalb des Freiraums (F1) geformt werden, wobei sie sich von der Seite der Formungsfläche (11a) zu der Seite der hinteren Fläche (11b) fortsetzen.

4. Gummiartikelform (11), die Luftauslassmittel (15) zum Auslassen von Luft von einer Seite einer Formungsfläche (11a) zum Formen eines Gummiartikels zu einer Seite einer hinteren Fläche (11b) aufweist, wobei die Luftauslassmittel (15) Folgendes umfassen:
ein Loch (20), das von einer Formungsfläche (11a) zu einer hinteren Fläche (11b) der Gummiartikelform hindurchdringt; und
ein Ventilelement (30), das auf eine solche Weise innerhalb des Lochs (20) angeordnet ist, dass es einen vorbestimmten Freiraum (F) zwischen dem Ventilelement (30) und einer Lochwand, die das Loch (20) bildet, bereitstellt und einen Durchgang von Luft zu der Seite der hinteren Fläche (11b) regelt,
wobei das Loch (20) Folgendes aufweist
einen zylindrischen Einströmungsbereich (21), der sich auf der Formungsfläche (11a) öffnet und wo die Luft von der Seite der Formungsfläche (11a) einströmt,
einen Auslassbereich (25), der sich auf der hinteren Fläche (11b) öffnet und wo die Luft, die von dem Einströmungsbereich (21) eingeströmt ist, ausgelassen wird,
einen Zwischenbereich (23), der mit dem Einströmungsbereich (21) und dem Auslassbereich (25) in Verbindung steht und im Durchmesser größer ist als der Einströmungsbereich (21) und der Auslassbereich (25),
einen Anschlagsbereich (24), der an einem Ende auf der Einströmungsbereichsseite des Zwischenbereichs (23) angeordnet ist und einen Durchmesser aufweist, der sich allmählich auf den Durchmesser des Zwischenbereichs (23) vergrößert,
einen ringförmigen Ventilsitzbereich (22), der an einem Ende auf der Ausströmungsbereichsseite des Zwischenbereichs (23) angeordnet ist und einen Durchmesser aufweist, der sich allmählich von dem Durchmesser des Zwischenbereichs (23) verringert, aufweist, und
wobei das Ventilelement (30) Folgendes aufweist:
einen Einleitungsteil (31), der in einer Größe geformt ist, die dazu in der Lage ist, innerhalb des Einströmungsbereichs (21) gehalten zu werden, und einen ringförmigen Freiraum (F1) mit einer vorbestimmten Abmessung zwischen einem Umfang desselben und einer Wand des Lochs (20) des Einströmungsbereichs (21) bildet,
einen Stammteil (32), der im Durchmesser kleiner ist als der Zwischenbereich (23) und in der Länge kürzer als der Zwischenbereich (23),
einen Eingriffsabschnitt (35), der an einem Ende auf der Einströmungsbereichsseite des Stammteils (32) angeordnet und dafür geformt ist, gegen den Anschlagsbereich (24) zu stoßen, so dass er nicht dazu in der Lage ist, in den Einströmungsbereich (21) einzudringen, und
einen ringförmigen Abdichtungsabschnitt (34), der an einem Ende auf der Ausströmungsbereichsseite des Stammteils (32) angeordnet und im Durchmesser kleiner als der Ventilsitzbereich (22) geformt ist, um, mit dem Ventilsitzbereich (22), den Luftstrom zu sperren, der von der Formungsfläche (11a) zu der hinteren Fläche (11b) hindurchgeht,
wobei:
das Loch (20) und das Ventilelement (30) durch einen additiven Fertigungsprozess erhalten werden können, der Folgendes umfasst:
Werfen eines Laserstrahls auf Metallpulver und Schichten gesinterter Lagen,
wobei Verbindungsstücke (50), welche die Wand des Lochs (20) und das Ventilelement (30) dadurch miteinander verbinden, dass sie in Berührung mit der Wand des Lochs (20), die das Loch (20) bildet, und dem Umfang des Ventilelements (30) kommen, gleichzeitig auf einer Seite einer unteren Lage in einer Schichtungsrichtung der gesinterten Lagen innerhalb des Freiraums (F) geformt werden, wobei sie sich von der Seite der Formungsfläche (11a) zu der Seite der hinteren Fläche (11b) fortsetzen.

5. Gummiartikelform (11) nach Anspruch 3 oder Anspruch 4, wobei eine Endfläche auf der Seite der Formungsfläche (11a) des Einleitungsteils (31) bündig mit der Formungsfläche (11a) ist, wenn der Abdichtungsabschnitt (34) auf dem Ventilsitzbereich (22) sitzt.

6. Gummiartikelform (11) nach einem der Ansprüche 3 bis 5, wobei die Freiraumabmessung des ringförmigen Freiraums (F1) größer als 0 mm und kleiner als 0,5 mm ist.

7. Gummiartikelform (11) nach einem der Ansprüche 2 bis 6, wobei das Loch (20) und das Ventilelement (30) durch einen additiven Fertigungsprozess geformt sind.

8. Verfahren zum Herstellen der Gummiartikelform nach einem der Ansprüche 1 bis 7 durch einen additiven Fertigungsprozess, das Folgendes umfasst:
Werfen eines Laserstrahls auf Metallpulver und Schichten gesinterter Lagen,
wobei Verbindungsstücke, welche die Wand des Lochs (20) und das Ventilelement (30) dadurch miteinander verbinden, dass sie in Berührung mit der Wand des Lochs (20), die das Loch (20) bildet, und dem Umfang des Ventilelements (30) kommen, gleichzeitig auf einer Seite einer unteren Lage in einer Schichtungsrichtung der gesinterten Lagen innerhalb des Freiraums (F) geformt werden, wobei sie sich von der Seite der Formungsfläche (11a) zu der Seite der hinteren Fläche (11b) fortsetzen.

9. Verfahren zum Herstellen einer Gummiartikelform nach Anspruch 8, wobei die Verbindungsstücke jeweils kugelförmig sind.

10. Verfahren zum Herstellen einer Gummiartikelform nach Anspruch 8 oder Anspruch 9, wobei der Einleitungsteil (31) des Ventilelements (30) oberhalb der Formungsfläche (11a) vorspringt.

## Revendications

1. Moule pour article en caoutchouc (11) présentant un dispositif d'évacuation d'air (15) permettant d'évacuer l'air d'un côté de surface de moulage (11a) afin de mouler un article en caoutchouc sur un côté de surface arrière (11b), le dispositif d'évacuation d'air (15) comprenant :
un trou (20) pénétrant depuis une surface de moulage (11a) vers une surface arrière (11b) du moule pour article en caoutchouc (11) ; et
un élément de soupape (30) disposé dans le trou (20) de façon à fournir un jeu prédéterminé (F) entre l'élément de soupape (30) et une paroi du trou formant le trou (20),
dans lequel le trou (20) présente une zone de flux d'entrée (21) dans laquelle s'écoule l'air provenant du côté de la surface de moulage (11a), une zone d'évacuation (25) dans laquelle l'air qui s'est écoulé depuis la zone de flux d'entrée (21) est évacué vers le côté de la surface arrière (11b), et une zone intermédiaire (23) communiquant avec la zone de flux d'entrée (21) et la zone d'évacuation (25) et de diamètre inférieur à la zone de flux d'entrée (21) et à la zone d'évacuation (25), et
dans lequel l'élément de soupape (30) présente une partie d'entrée (31) sur le côté de la surface de moulage (11a), une partie de sortie (33) sur le côté de la surface arrière (11b), et une partie de tronc (32) reliant la partie d'entrée (31) à la partie de sortie (33) et de diamètre inférieur à la partie d'entrée (31) et à la partie de sortie (33),
**caractérisé en ce que** :
le trou (20) et l'élément de soupape (30) peuvent être obtenus par un procédé de fabrication d'additif, comprenant :
la projection d'un faisceau laser sur des poudres métalliques et le feuilletage de couches frittées,
dans lequel des pièces d'interconnexion (50) interconnectant la paroi du trou (20) et l'élément de soupape (30) en entrant en contact avec la paroi de trou (20) formant le trou (20) et la périphérie de l'élément de soupape (30) sont formées simultanément sur un côté de couche inférieure dans une direction de feuilletage des couches frittées dans le jeu (F) se poursuivant depuis le côté de la surface de moulage (11a) jusqu'au côté de la surface arrière (11b).

2. Moule pour article en caoutchouc (11) présentant un dispositif d'évacuation d'air (15) permettant d'évacuer l'air d'un côté de surface de moulage (11a) afin de mouler un article en caoutchouc sur un côté de surface arrière (11b), le dispositif d'évacuation d'air (15) comprenant :
un trou (20) pénétrant depuis une surface de moulage (11a) vers une surface arrière (11b) du moule pour article en caoutchouc ; et
un élément de soupape (30) disposé dans le trou (20) de façon à fournir un jeu prédéterminé (F) entre l'élément de soupape (30) et une paroi du trou formant le trou (20),
dans lequel le trou (20) présente une zone de flux d'entrée (21) dans laquelle s'écoule l'air provenant du côté de la surface de moulage (11a), une zone d'évacuation (25) dans laquelle l'air qui s'est écoulé depuis la zone de flux d'entrée (21) est évacué vers le côté de la surface arrière (11b), et une zone intermédiaire (23) communiquant avec la zone de flux d'entrée (21) et la zone d'évacuation (25) et de diamètre supérieur à la zone de flux d'entrée (21) et à la zone d'évacuation (25), et
dans lequel l'élément de soupape (30) présente une partie d'entrée (31) sur le côté de la surface de moulage (11a), une partie de sortie (33) sur le côté de la surface arrière (11b), et une partie de tronc (32) reliant la partie d'entrée (31) à la partie de sortie (33) et de diamètre supérieur à la partie d'entrée (31) et à la partie de sortie (33),
dans lequel :
le trou (20) et l'élément de soupape (30) peuvent être obtenus par un procédé de fabrication d'additif, comprenant :
la projection d'un faisceau laser sur des poudres métalliques et le feuilletage de couches frittées,
dans lequel des pièces d'interconnexion (50) interconnectant la paroi du trou (20) et l'élément de soupape (30) en entrant en contact avec la paroi de trou (20) formant le trou (20) et la périphérie de l'élément de soupape (30) sont formées simultanément sur un côté de couche inférieure dans une direction de feuilletage des couches frittées dans le jeu (F) se poursuivant depuis le côté de la surface de moulage (11a) jusqu'au côté de la surface arrière (11b).

3. Moule pour article en caoutchouc (11) présentant un dispositif d'évacuation d'air (15) permettant d'évacuer l'air d'un côté de surface de moulage (11a) afin de mouler un article en caoutchouc sur un côté de surface arrière (11b), le dispositif d'évacuation d'air (15) comprenant :
un trou (20) pénétrant depuis une surface de moulage (11a) vers une surface arrière (11b) du moule pour article en caoutchouc ; et
un élément de soupape (30) disposé dans le trou (20) de façon à fournir un jeu prédéterminé (F) entre l'élément de soupape (30) et une paroi du trou formant le trou (20), et contrôlant le passage d'air vers le côté de la surface arrière (11b),
dans lequel le trou (20) présente une zone de flux d'entrée cylindrique (21) qui s'ouvre sur la surface de moulage (11a) et où l'air provenant du côté de la surface de moulage (11a) s'écoule, une zone d'évacuation (25) qui s'ouvre sur la surface arrière (11b) et où l'air qui s'est écoulé à l'intérieur depuis la zone de flux d'entrée (21) est évacué, une zone intermédiaire (23) communiquant avec la zone de flux d'entrée (21) et la zone d'évacuation (25) et de diamètre inférieur à la zone de flux en entrée (21) et à la zone d'évacuation (25), une zone de logement de soupape annulaire (22) disposée à une extrémité sur un côté de zone de flux d'entrée de la zone intermédiaire (23) et présentant un diamètre qui se réduit progressivement jusqu'au diamètre de la zone intermédiaire (23), et une zone de butée (24) disposée à une extrémité sur un côté de zone d'évacuation de la zone intermédiaire (23) et présentant un diamètre augmentant progressivement depuis le diamètre de la zone intermédiaire (23), et
dans lequel l'élément de soupape (30) présente une partie d'entrée (31) réalisée dans une taille capable d'être maintenue à l'intérieur de la zone de flux d'entrée (21) et formant un jeu annulaire (F1) d'une dimension prédéterminée entre une périphérie correspondante et une paroi de trou (20) de la zone de flux d'entrée (21), une partie de tronc (32) de diamètre inférieur à la zone intermédiaire (23) et de longueur supérieure à la zone intermédiaire (23), une partie d'étanchéité annulaire (34) formée avec un diamètre inférieur à celui de la zone de logement de soupape (22) à une extrémité sur le côté zone de flux d'entrée de la partie de tronc (32) permettant de bloquer, avec la zone de logement de soupape (22), le flux d'air qui passe de la surface de moulage (11a) à la surface arrière (11b) et une partie de prise (35) présentant une taille par laquelle la partie de prise (35) heurte la zone de butée (24) à une extrémité sur le côté de zone d'évacuation de la partie de tronc (32) de façon à ne pas pouvoir entrer dans la partie intermédiaire,
dans lequel :
le trou (20) et l'élément de soupape (30) peuvent être obtenus par un procédé de fabrication d'additif, comprenant :
la projection d'un faisceau laser sur des poudres métalliques et le feuilletage de couches frittées,
dans lequel des pièces d'interconnexion (50) interconnectant la paroi du trou (20) et l'élément de soupape (30) en entrant en contact avec la paroi de trou (20) formant le trou (20) et la périphérie de l'élément de soupape (30) sont formées simultanément sur un côté de couche inférieure dans une direction de feuilletage des couches frittées dans le jeu (F1) se poursuivant depuis le côté de la surface de moulage (11a) jusqu'au côté de la surface arrière (11b).

4. Moule pour article en caoutchouc (11) présentant un dispositif d'évacuation d'air (15) permettant d'évacuer l'air d'un côté de surface de moulage (11a) afin de mouler un article en caoutchouc vers un côté de surface arrière (11b), le dispositif d'évacuation d'air (15) comprenant :
un trou (20) pénétrant depuis une surface de moulage (11a) vers une surface arrière (11b) du moule pour article en caoutchouc ; et
un élément de soupape (30) disposé dans le trou (20) de façon à fournir un jeu prédéterminé (F) entre l'élément de soupape (30) et une paroi du trou formant le trou (20), et contrôlant le passage d'air vers le côté de la surface arrière (11b),
dans lequel le trou (20) présente
une zone de flux d'entrée cylindrique (21) qui s'ouvre sur la surface de moulage (11a) et où l'air provenant du côté de la surface de moulage (11a) s'écoule,
une zone d'évacuation (25) qui s'ouvre sur la surface arrière (11b) et où l'air qui s'est écoulé depuis la zone de flux d'entrée (21) est évacué,
une zone intermédiaire (23) communiquant avec la zone de flux d'entrée (21) et la zone d'évacuation (25) et d'un diamètre supérieur à la zone de flux d'entrée (21) et la zone d'évacuation (25),
une zone de butée (24) disposée à une extrémité sur le côté de zone de flux d'entrée de la zone intermédiaire (23) et présentant un diamètre qui augmente progressivement jusqu'au diamètre de la zone intermédiaire (23),
une zone de logement de soupape annulaire (22) disposée à une extrémité sur le côté zone d'évacuation de la zone intermédiaire (23) et présentant un diamètre se réduisant progressivement depuis le diamètre de la zone intermédiaire (23), et
dans lequel l'élément de soupape (30) présente
une partie d'entrée (31) réalisée dans une taille capable d'être maintenue à l'intérieur de la zone de flux d'entrée (21) et formant un jeu annulaire (F1) d'une dimension prédéterminée entre une périphérique correspondante et une paroi de trou (20) de la zone de flux d'entrée (21),
une partie de tronc (32) inférieure en diamètre à la zone intermédiaire (23) et plus courte en longueur que la zone intermédiaire (23),
une partie de prise (35) disposée à une extrémité sur le côté de la zone de flux d'entrée de la partie de tronc (32) et formée de façon à heurter la zone de butée (24), de façon à ne pas pouvoir entrer dans la zone de flux d'entrée (21), et
une partie d'étanchéité annulaire (34) disposée à une extrémité sur le côté de la zone d'évacuation de la partie de tronc (32) et formée de façon à être plus petite en diamètre que la zone de logement de soupape (22) permettant de bloquer, avec la zone de logement de soupape (22), le flux d'air passant de la surface de moulage (11a) à la surface arrière (11b),
dans lequel :
le trou (20) et l'élément de soupape (30) peuvent être obtenus par un procédé de fabrication d'additif, comprenant :
la projection d'un faisceau laser sur des poudres métalliques et le feuilletage de couches frittées,
dans lequel des pièces d'interconnexion (50) interconnectant la paroi du trou (20) et l'élément de soupape (30) en entrant en contact avec la paroi de trou (20) formant le trou (20) et la périphérie de l'élément de soupape (30) sont formées simultanément sur un côté de couche inférieure dans une direction de feuilletage des couches frittées dans le jeu (F) se poursuivant depuis le côté de la surface de moulage (11a) jusqu'au côté de la surface arrière (11b).

5. Moule pour article en caoutchouc (11) selon la revendication 3 ou la revendication 4, dans lequel une surface d'extrémité sur le côté de la surface de moulage (11a) de la partie d'entrée (31) affleure la surface de moulage (11a) lorsque la partie d'étanchéité (34) est installée sur la zone de logement de soupape (22).

6. Moule pour article en caoutchouc (11) selon l'une quelconque des revendications 3 à 5, dans lequel la dimension du jeu annulaire (F1) est supérieure à 0 mm et inférieure à 0,5 mm.

7. Moule pour article en caoutchouc (11) selon l'une quelconque des revendications 2 à 6, dans lequel le trou (20) et l'élément de soupape (30) sont formés par un procédé de fabrication d'additif.

8. Procédé de fabrication du moule pour article en caoutchouc selon l'une quelconque des revendications 1 à 7, par un procédé de fabrication d'additif, comprenant :
la projection d'un faisceau laser sur des poudres métalliques et le feuilletage de couches frittées,
dans lequel des pièces d'interconnexion interconnectant la paroi du trou (20) et l'élément de soupape (30) en entrant en contact avec la paroi de trou (20) formant le trou (20) et la périphérie de l'élément de soupape (30) sont formées simultanément sur un côté de couche inférieure dans une direction de feuilletage des couches frittées dans le jeu (F) se poursuivant depuis le côté de la surface de moulage (11a) jusqu'au côté de la surface arrière (11b).

9. Procédé de fabrication d'un moule pour article en caoutchouc selon la revendication 8, dans lequel les pièces d'interconnexion sont chacune sphériques.

10. Procédé de fabrication d'un moule pour article en caoutchouc selon la revendication 8 ou la revendication 9, dans lequel la partie d'entrée (31) de l'élément de soupape (30) fait saillie au-dessus de la surface de moulage (11a).
